# EUROPÄISCHE PATENTANMELDUNG

(11) **EP 1 216 802 A2**
(43) Veröffentlichungstag der Anmeldung: **26.06.2002**
(21) Anmeldenummer: 01130417.7
(22) Anmeldetag: 20.12.2001
(51) Int. Cl.: B27M 1/08, B27M 3/18, B27F 1/06, B65G 57/32

(54) **Speichervorrichtung für Platten**

(30) Priorität: 20.12.2000 DE 10063472
(71) Anmelder: Wamhoff, Peter, 49078 Osnabrück (DE)
(72) Erfinder: Wamhoff, Peter, 49078 Osnabrück (DE)
(74) Vertreter: Jäger, Jörg

(57) **Zusammenfassung**

Um bei einem kontrollierten Abschalten einer die Kanten von Platten insbesondere für die Möbelindustrie bearbeitenden Kantenbearbeitungsvorrichtung eine Reduzierung der Gesamtbaulänge zu erreichen, ist eine Speichervorrichtung 1 für Platten 5 vorgesehen, angeordnet unmittelbar am Ende der die Kanten der Platten 3 bearbeitenden Kantenbearbeitungsvorrichtung 2, die eine die bei einem Abschalten der Kantenbearbeitungsvorrichtung 2 noch aus der Vorrichtung 2 auslaufenden Platten aufnehmenden Kapazität aufweist, wobei die Platten 5 in einer Ruhelage festgelegt abgespeichert gehalten sind.

## Beschreibung

Die Erfindung betrifft eine Speichervorrichtung für Platten wie Holzplatten, MDF- oder HDF-Platten oder dergleichen, wie sie insbesondere in der Möbelindustrie Verwendung finden, und die unmittelbar im Anschluß an eine Kantenbearbeitungsvorrichtung für derartige Platten angeordnet ist.

Eine Bearbeitung von Platten, wie sie insbesondere für die Möbelindustrie Verwendung finden, erfolgt zumeist In-Line in Kantenbearbeitungsvorrichtungen, die eine Vielzahl von Bearbeitungsschritten an einer einzelnen Platte durchführen können. Hierunter fallen insbesondere das Zuschneiden auf ein vorgegebenes Maß, das Besäumen und das Laminieren oder Furnieren von derartigen Platten.

Regelmäßig ist ein Laminieren bzw. ein Furnieren bei derartigen Kantenbearbeitungsvorrichtungen ein letzter Bearbeitungsschritt. An diese Bearbeitungsstation schließt weiter eine Rollenbahn außerhalb der Kantenbearbeitungsvorrichtung an, die eine gewisse Anzahl von Platten über ihre Längserstreckung aufnehmen kann. Diese sich an die Kantenbearbeitungsvorrichtung anschließende Rollenbahn dient auch als Leimzonenfreilauf, d. h. für eine Aufnahme der bei einem kontrollierten Abschalten der Kantenbearbeitungsvorrichtung dann noch aus der Furnierstation, der Verleimstation oder dergleichen austretenden Platten und weiter für ein Weiterleiten an bspw. eine Verladestation.

Bei einer Länge von durchaus ca. 2 bis 3 m der in einer Kantenbearbeitungsvorrichtung zu bearbeiteten Platten, beispielsweise in der Möbelindustrie, und bei einem Abstand von ca. 40 bis 50 cm von solchen Platten untereinander bei einem Durchlauf durch die Kantenbearbeitungsvorrichtung wird, naturgemäß abhängig von der Anzahl der bei einem kontrollierten Abschalten noch austretenden Platten, eine erhebliche Länge für den Leimzonenfreilauf benötigt. In Folge weist eine derartige In-Line-Bearbeitungsvorrichtung für Platten mit ihren Zu- und Abführvorrichtungen erhebliche Längenabmessungen auf, die nicht nur von der Länge der Kantenbearbeitungsvorrichtung selbst bestimmt sind.

Vor diesem technischen Hintergrund macht die Erfindung es sich zur Aufgabe, eine Vorrichtung zur Verfügung zu stellen, die die aus einer Kantenbearbeitungsvorrichtung bei einem kontrollierten Abschalten noch austretenden Platten auf kurzer Strecke aufnehmen kann, um so die Längenabmessung zu reduzieren.

Diese technische Problematik wird durch den Gegenstand des Anspruchs 1 gelöst, wobei dort auf einer Speichervorrichtung für Platten abgestellt wird, die unmittelbar am Ende einer die Kanten der Platten bearbeitenden Kantenbearbeitungsvorrichtung angeordnet ist, die eine die bei einem Abschalten der Kantenbearbeitungsvorrichtung noch aus der Vorrichtung auslaufenden Platten aufnehmende Speicherkapazität aufweist und in der die Platten in einer Ruhelage festgelegt abgespeichert gehalten sind.

In Folge der Ausbildung einer Speichervorrichtung, in der die Platten in einer Ruhelage festgelegt abgespeichert gehalten sind, wird bspw. ein vergleichsweise langer Leimzonenfreilauf vermieden. Vielmehr kann eine Speichervorrichtung nach der Erfindung äußerst kompakt aufgebaut sein. Hierbei ist die Kapazität der Speichervorrichtung derart zu bemessen, daß die bei einem regulären Abschalten der Kantenbearbeitungsvorrichtung noch aus der Vorrichtung auslaufenden Platten sicher auch aufgenommen werden können.

Insbesondere wird eine Kapazität der Speichervorrichtung dadurch bestimmt, daß die Anzahl der speicherbaren Platten der Anzahl der Platten des nötigen Leimzonenfreilaufs der Kantenbearbeitungsvorrichtung entspricht, beispielsweise vier Platten.

In einer bevorzugten Ausführungsform ist bei einer Speichervorrichtung nach der Erfindung vorgesehen, daß die Speichervorrichtung Platten insbesondere unmittelbar aufeinander abgelegt aufnimmt. Hierdurch ist die Länge der Speichervorrichtung lediglich nach der maximalen Länge der zu bearbeitenden Platten auszulegen, da Platten nicht über einen üblichen Leimzonenfreilauf hintereinander angeordnet bspw. einer Verladestation noch zugeführt werden müssen. Vielmehr werden Platten durch die Speichervorrichtung nach der Erfindung bevorzugt vertikal plan aufeinander abgelegt in einer Ruhelage gehalten.

In konstruktiver Ausgestaltung kann hierzu vorgesehen sein, daß die Speichervorrichtung eine eben ausgebildete, im wesentlichen horizontal ausgerichtete Ablage aufweist. In üblicher Weise kann eine derartige Ablage auch mit Transportvorrichtungen wie Rollen, Kugeln, Luftkissen oder dergleichen für ein leichtes Verschieben darauf abgelegter Platten versehen sein. Insbesondere ist dann ein Auflaufen von Platten aus der Kantenbearbeitungsvorrichtung auf die Ablage in einfacher Weise auch sichergestellt. Werden Platten von der Kantenbearbeitungsvorrichtung anderweitig übergeben, so kann die Ablage beispielsweise auch einfach rahmenartig ausgebildet sein.

Die Höhe der Oberseite der Ablage wird sich regelmäßig nach der Höhe des Auslaufes der Platten aus der Kantenbearbeitungsvorrichtung richten. Eine aus der Kantenbearbeitungsvorrichtung auslaufende erste Platte wird regelmäßig unmittelbar auf eine solche Ablage gelangen. Eine nachfolgende Platte kann dann von einer Übergabevorrichtung der Kantenbearbeitungsvorrichtung auf der auf der Ablage abgelegten ersten Platte wiederum abgelegt werden und sofort.

Bevorzugt wird jedoch, daß die Ablage vertikal verschiebbar ausgebildet ist. Insbesondere durch diese Maßnahme sind bereits vorhandene Kantenbearbeitungsvorrichtungen mit einer Speichervorrichtung nach der Erfindung auch nachrüstbar.

In konstruktiver Ausgestaltung hat es sich bewährt, die Ablage mit Anschlägen zu versehen, deren Höhe der Anzahl der abzulegenden Platten entspricht. Durch diese Maßnahme ist sichergestellt, daß Platten im wesentlich exakt übereinander auch abgelegt werden können.

Ein Weitertransport der gleichsam zwischengelagerten Platten erfolgt zweckmäßigerweise mittels einer Saugtraverse, die oberhalb der Ablage vorgesehen ist.

Für die Absenkung der Ablage kann eine diese Absenkung taktweise regelnde Steuervorrichtung vorgesehen sein. Der Takt mag beispielsweise frei programmierbar vorgebbar sein, insbesondere dann, wenn vergleichsweise große Chargen von Platten gleicher Abmessungen verarbeitet werden. Verlassen hingegen Platten von häufig wechselnden Abmessungen die Kantenbearbeitungsvorrichtung, ist eine Regelung durch die Platten selbst, beispielsweise durch Lichtschranken, Mikroschalter oder dergleichen gesteuert, grundsätzlich auch möglich. Hierbei wird sich der Weg der Absenkung regelmäßig nach der Plattenstärke bevorzugt richten, so daß Platten unmittelbar auch aufeinander abgleitend auf der Ablage abgelegt werden können. So wird ein heftiges Aufeinanderprallen bei einer Ablage mit zu großen vertikalen Zwischenräumen vermieden.

Ist eine Ablage in der Höhe nicht veränderbar, so ist es zweckmäßig, eine die Platten auf der Ablage ablegende Übergabevorrichtung um eine Schwenkachse verschwenkbar ausgebildet vorzusehen. Es kann dann die Übergabevorrichtung in einfacher Weise entsprechend einer Transportvorrichtung ausgebildet sein, deren bspw. Rollen, Walzen, Kugeln oder dergleichen tragender Rahmen in Gänze lediglich angestellt werden muß, damit Platten auf der Ablage übereinander abgelegt werden können.

Bevorzugt ist dabei die Schwenkachse etwa mittig angeordnet und verschwenkt damit insbesondere eine Transportvorrichtung der Übergabevorrichtung nach Art einer Wippe. Damit entspricht der Winkel, unter dem eine Platte auf die Gurte des Gurtförderers auftrifft, dem Winkel, unter dem sie auch abgelegt wird. Bei einer außermittigen, durchaus möglichen Anordnung der Schwenkachse wäre zumindest ein Winkel deutlich größer, was zu einer Beschädigung der zu übergebenden Platte führen könnte. Auch sind bei einer mittigen Anordnung an den Enden der Übergabevorrichtung geringe Kräfte lediglich zu beherrschen, wenn vorgesehen ist, daß vier Stellvorrichtungen in den Eckbereichen der Übergabevorrichtung vorgesehen sind. Als Stellvorrichtungen bieten sich dann auch eine Vielzahl von Ausführungen pneumatischer und/oder elektrischer Art an, bspw. Spindelantriebe, Hubzylinder, Getriebe und dergleichen mehr.

Um insbesondere der Übergabe von Platten unterschiedlichster Abmessungen auch gerecht zu werden, wird bevorzugt die Übergabevorrichtung als Gurtförderer ausgebildet. Eine Vielzahl von sich in Transportrichtung und damit auch in Längserstreckung der Kantenbearbeitungsvorrichtung erstreckenden Gurten nebeneinander können zumindest gruppenweise in einfacher Weise weiter über Umlenkrollen auf einer gemeinsamen Achse problemlos auch bei einem Verschwenken weiter angetrieben werden. Auch kann das Gewicht gegenüber einer Rollenbahn regelmäßig geringer gehalten sein.

Sind regelmäßig Platten unterschiedlicher Abmessungen und insbesondere solche sehr geringer Abmessungen gegenüber den Maximalabmessungen einer Speichervorrichtung nach der Erfindung zu übergeben, kann weiter vorgesehen sein, daß die Ablage mit Transportrollen versehen ist, zwischen denen Gurte von Gurtförderern angeordnet sind und daß die Auflageflächen der Transportrollen und der Gurte gegeneinander verstellbar sind. Es kann dann die Ablage weiter mit geeigneten Anschlägen versehen sein, so daß die Platten exakt auf der Ablage positioniert gespeichert werden können, indem diese zuerst bspw. von den Gurtförderern in Längserstreckung der Kantenbearbeitungsvorrichtung bis an einen Endanschlag verbracht werden und dort, übernommen von den Rollen, quer bis an einen weiteren Anschlag befördert werden, wenn die Transportrollen quer zu der Längserstreckung der Kantenbearbeitungsvorrichtung angeordnet sind. Die Übernahme der Platten durch die Rollen erfolgt dabei durch das Anheben derselben oder, bevorzugt dadurch, daß die zwischen den Transportrollen angeordneten Gurte absenkbar sind. Damit liegen die Platten immer nur auf einer Auflagefläche der beiden Transportvorrichtungen auf.

In weiterer konstruktiver Ausgestaltung kann vorgesehen sein, daß Gruppen von Transportrollen nebeneinander quer zu der Längserstreckung angeordnet sind, wobei jedoch die Gurte der Gurtförderer durchaus sich über mehrere Gruppen dann erstrecken können.

Die Erfindung wird anhand der Zeichnung näher erläutert, in der lediglich Ausführungsbeispiele dargestellt sind. In der Zeichnung zeigt:
- Fig. 1:: schematisch eine unmittelbar an eine Kantenbearbeitungsvorrichtung anschließende Speichervorrichtung nach der Erfindung,
- Fig. 2:: in einer Seitenansicht eine Übergabevorrichtung mit anschließender Ablage,
- Fig. 3:: eine stirnseitige Ansicht gem. des Pfeils III in Fig. 2,
- Fig. 4: eine Draufsicht gem. des Pfeils IV in Fig. 2 und
- Fig. 5:: in einer vergrößerten Darstellung die Übergabevorrichtung aus Fig. 2.

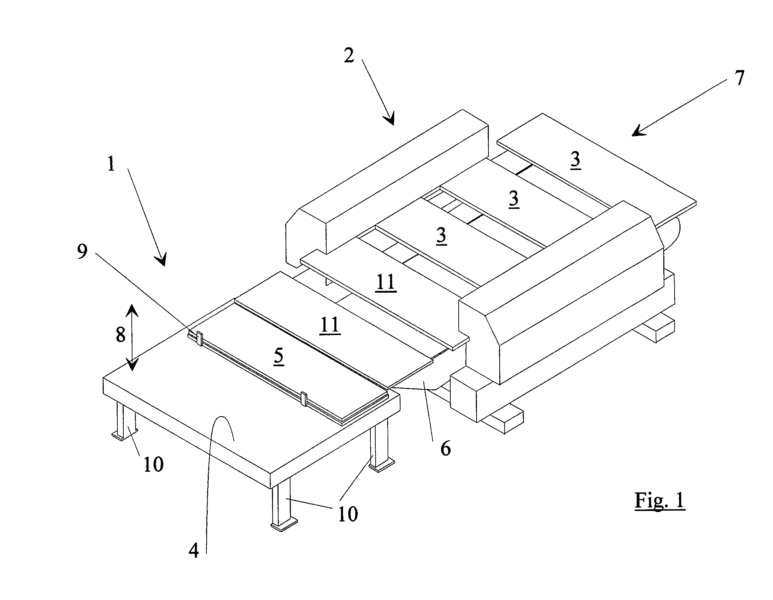

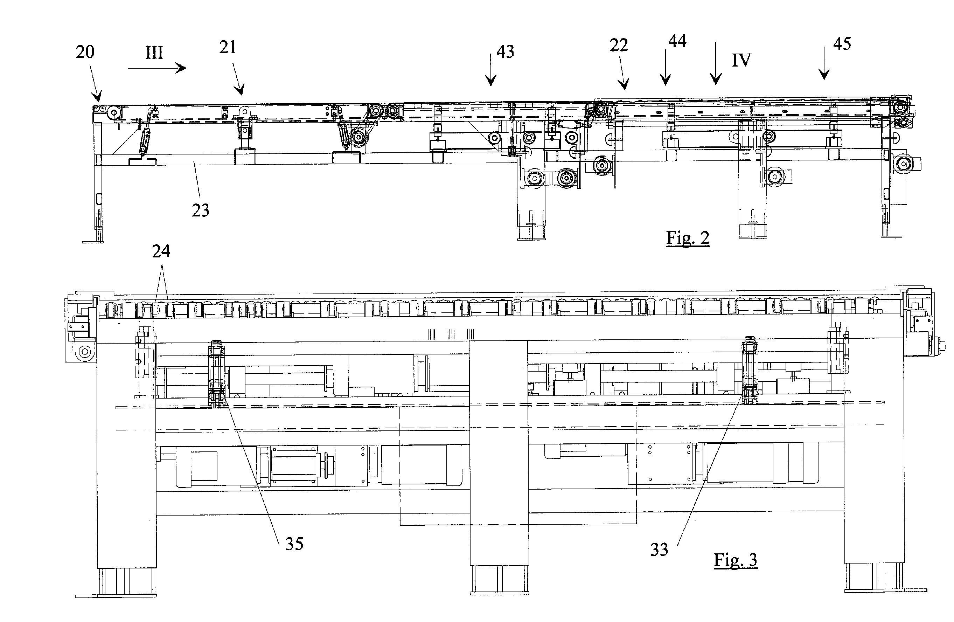

In Figur 1 ist eine Speichervorrichtung 1 nach der Erfindung unmittelbar an eine Kantenbearbeitungsvorrichtung 2 anschließend dargestellt. Bei einem normalen Betrieb der Kantenbearbeitungsvorrichtung 2 werden Platten 3 auf einer Ablage 4 der Speichervorrichtung 1 unmittelbar abgelegt und erfolgt von dort ein Weitertransport bspw. zu einer Verladestation, einem Lager oder dergleichen. Hierzu kann die Ablage 4 in an sich bekannter Weise über Rollen, Kugeln, Luftkissen oder dergleichen verfügen. Alternativ und bevorzugt erfolgt jedoch eine Weiterbeförderung mittels einer oberhalb der Ablage angeordneten, nicht dargestellten Saugtraverse.

Bei einem regulären Abschalten der Kantenbearbeitungsvorrichtung 2 werden Platten 11, die bei einem regulären Herunterfahren der Kantenbearbeitungsvorrichtung 2 diese noch verlassen werden, gemäß den Platten 5 plan übereinander auf der eben ausgebildeten, im wesentlichen sich horizontal erstreckenden Ablage 4 abgelegt. Dort sind die Platten 5 in einer Ruhelage festgelegt abgespeichert gehalten.

Die Kapazität der Speichervorrichtung 1 ist insbesondere derart ausgelegt, daß die Anzahl der Platten, die sich üblicherweise in einem Leimzonenfreilauf befinden würden, hier beispielsweise vier Platten 5 und 11, sicher aufgenommen und gespeichert werden können.

Die Platten 5 können mittels einer Übergabevorrichtung 6 von der Kantenbearbeitungsvorrichtung 2 auf der Ablage 4 abgelegt werden. Da die Speichervorrichtung 1 die Platten 5 aufeinander abgelegt aufnimmt, ist die Fläche der Ablage 4 der maximal zu bearbeitenden Plattengröße entsprechend auszulegen. Hierbei ist insbesondere in Bearbeitungsrichtung gemäß Pfeil 7 die Längenabmessung der Ablage 4 und damit der Speichervorrichtung 1 lediglich der maximalen Länge einer Platte 3 in Bearbeitungsrichtung 7 auszulegen. Eine deutliche Längenverkürzung gegenüber einer Kantenbearbeitungsvorrichtung 2 mit außerhalb anschließender Rollenbahn für einen Leimzonenfreilauf für mehrere Platten ist durch die erfindungsgemäße Speichervorrichtung 1 damit erreicht worden.

Bevorzugt wird, daß die Ablage 4 vertikal gemäß Pfeil 8 verschiebbar ist. Hierbei sollte durch eine geeignete vorgesehene Steuervorrichtung ein Verschieben taktweise derart erfolgen, daß entsprechend der Dicke der Platten 3, 11 bzw. 5 für die Speicherung eine Absenkung erfolgt. Solches kann sowohl hinsichtlich der Frequenz als auch hinsichtlich des zu verschiebenden Weges programmierbar erfolgen, ggfls. jedoch auch gesteuert durch Lichtschranken, Mikroschalter oder dergleichen. Ist die Ablage 4 vertikal verschiebbar vorgesehen, kann die Übergabevorrichtung 6 starr ausgebildet sein.

Zweckmäßigerweise ist die Ablage 4 weiter mit Anschlägen 9 versehen, durch die exakt positioniert Platten 5 übereinander auf der Ablage 4 abgelegt werden können. Entsprechend der Anzahl der zu speichernden Platten und deren Stärke ist die Höhe der Anschläge 9 über der Ablage 4 zu bemessen.

Die Speichervorrichtung 1 ist beim Ausführungsbeispiel tischartig ausgebildet. Es kann vorgesehen sein, daß die Ablage 4, ggfls. auch rahmenartig ausgebildet, an dann seitlich angeordneten, feststehenden Stützen 10 vertikal verschiebbar ist. Alternativ kann die gesamte Speichervorrichtung 1 vertikal verschiebbar ausgebildet sein, so daß ggfls. auch Platten 5 eines größeren Formates als von der Fläche der Ablage 4 abgelegt werden können.

Für eine Abnahme der aufeinander abgelegten Platten 5 von der Ablage 4 ist letztlich eine nicht dargestellte Saugtraverse bevorzugt vorgesehen, die oberhalb der Ablage 4 angeordnet ist und Platten 5 nacheinander abnehmen und anderweitig ablegen kann für beispielsweise einen Weitertransport, eine Lagerung oder dergleichen mehr.

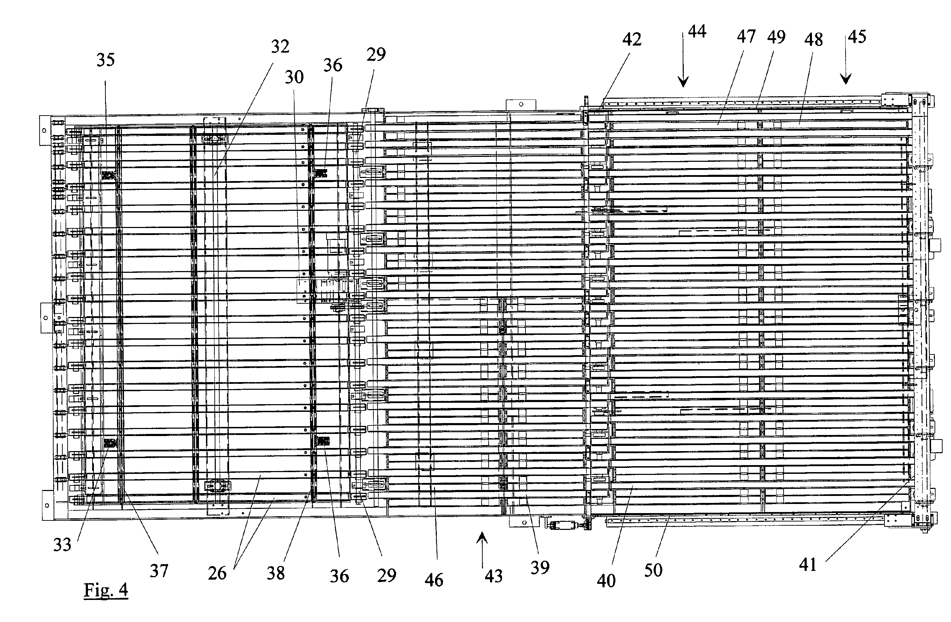

Anhand der Figuren 2 bis 5 wird ein weiteres Ausführungsbeispiel näher erläutert, das in der Seitenansicht gem. Fig. 2 ein Anschlußelement 20 für einen Anschluß an eine nicht dargestellte Kantenbearbeitungsvorrichtung, eine daran anschließende Übergabevorrichtung 21 und eine tischartig ausgebildete Ablage 22 aufweist.

Das Anschlußelement 20, die Übergabevorrichtung 21 und die tischartig ausgebildete Ablage 22 können auf einem gemeinsamen Rahmen 23 angeordnet sein und somit eine bauliche Einheit ausbilden, durch die bspw. auch eine bereits vorhandene Kantenbearbeitungsvorrichtung nachgerüstet werden kann. Der Rahmen 23 ist in üblicher Weise über einem Boden aufgeständert, womit eine Anpassung an die Höhe der Ausgabe einer Kantenbearbeitungsmaschine unproblematisch ist.

Das Anschlußelement 20 weist quer zu der Transportrichtung der nicht dargestellten Platten, in den Figuren 2-5 von links nach rechts gem. Pfeil III in Fig. 2, eine Vielzahl von jeweils zwei in Transportrichtung hintereinanderliegenden Rollen 24,25 auf, die quer zur Transportrichtung so beabstandet sein sollten, das für alle bearbeiteten Plattengrößen eine sichere Auflage gewährleistet ist.

Die Übergabevorrichtung 21 ist als Gurtförderer ausgebildet, bei dem eine Vielzahl in Transportrichtung nebeneinander liegender, jeweils um zwei Umlenkrollen 27,28 umlaufende Gurte 26 für den Transport der Platten vorgesehen sind.

Zweckmäßigerweise ist wenigstens für die Umlenkrollen 28 eine gemeinsame Achse 29 vorgesehen, die von einer Antriebsvorrichtung 30 in eine Drehbewegung versetzt wird. Dabei ist die Antriebsvorrichtung 30 frei von dem Rahmen 23 an den Rahmen 31 des Gurtförderers angebunden. Da die Übergabevorrichtung 21 um hier eine etwa mittig angeordnete Schwenkachse 32 verschwenkbar ausgebildet ist, erübrigen sich bei der Antriebsvorrichtung 30 somit ein Winkel- und Längenänderungen ausgleichendes Getriebe.

Für das Verschwenken sind in den Eckbereichen der Übergabevorrichtung 21 vier Stellvorrichtungen 33-36 vorgesehen, die hier als Zylinder ausgebildet angedeutet sind. Spindelantriebe oder dergleichen sind ebenso möglich. Um ein Verwinden des Gurtförderers zu vermeiden, können jeweils zwei in Transportrichtung quer nebeneinanderliegenden Stellvorrichtungen 33,35 bzw. 34,36 an einer gemeinsamen Quertraverse 37 bzw. 38 angreifen.

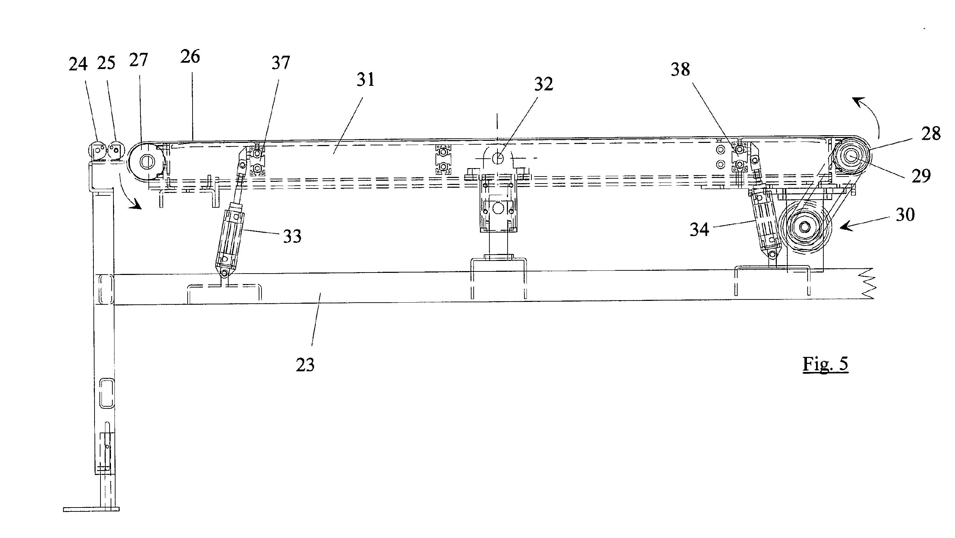

Das Verschwenken erfolgt durch die etwa mittig angeordnete Schwenkachse 32 nach Art einer Wippe, wobei in Fig. 2 bzw. 5 das rechte Ende des Gurtförderers soweit angehoben, resp. der linksseitige Anfang soweit abgesenkt wird, angedeutet durch die Pfeile, daß eine von den Gurten 26 beförderte Platte auf bereits auf der Ablage 22 befindliche Platten bzw. Plattenstapel abgelegt wird.

Auch wenn linksseitig abgesenkt wird, schlagen Platten kaum hart auf die Gurte 26 auf, da sie über die Rollen 24,25 laufend frei vorstehen, bis sie auf die Gurte 26 vergleichsweise sanft auftreffen.

Die Ablage 22 weist gleichfalls Gurte 39,40 weiterer Gurtförderer auf, so daß eine Platte bis an einen endseitigen Anschlag 41 verbringbar ist. Die Gurte 39,40 können antriebsmäßig gruppenweise zusammengefaßt und gesteuert oder wie hier durch die Umlenkrollen einer gemeinsamen, von einer Antriebsvorrichtung in Rotation versetzten Mittelachse 42 angetrieben werden.

Weiter ist die Ablage 22 mit drei Gruppen 43,44,45 von Transportrollen 46,47,48 versehen, die in ihrer Längserstreckung quer zu der Transportrichtung gem. Pfeil II angeordnet sind, wobei die Gurte 40 sich über die Transportrollen 47,48 der Gruppen 44,45 erstrecken. Infolge kann eine Platte weiter gegen Anschläge 49,50 verfahren und so exakt positioniert werden, wenn die Auflageflächen der Gurte 39,40 und der Transportrollen 46-48 relativ gegeneinander verstellbar sind.

Bei dem Ausführungsbeispiel sind die Gurte 39,40 der Gurtförderer von den Transportrollen 46-48 unabhängig gelagert und gemeinsam oder gruppenweise absenkbar. Eine Vielzahl von Positioniermöglichkeiten von Platten ist damit gegeben.

## Patentansprüche

1. Speichervorrichtung (1) für Platten (5), angeordnet unmittelbar am Ende einer die Kanten der Platten (3) bearbeitenden Kantenbearbeitungsvorrichtung (2), aufweisend eine die bei einem regulären Abschalten der Kantenbearbeitungsvorrichtung (2) noch aus der Vorrichtung (2) auslaufenden Platten aufnehmenden Kapazität, wobei die Platten (5) in einer Ruhelage festgelegt abgespeichert gehalten sind.

2. Speichervorrichtung nach Anspruch 1 einer Kantenbearbeitungsvorrichtung (2) mit einer Verleimvorrichtung, **dadurch gekennzeichnet, daß** die Anzahl der speicherbaren Platten (5) der Anzahl der Platten in einem nötigen Leimzonenfreilaufs entspricht.

3. Speichervorrichtung nach einem oder mehreren der vorangehenden Ansprüche, **dadurch gekennzeichnet, daß** die Speichervorrichtung (1) vier Platten (5) speichert.

4. Speichervorrichtung nach einem oder mehreren der vorangehenden Ansprüche, **dadurch gekennzeichnet, daß** die Speichervorrichtung Platten (5) aufeinander abgelegt aufnimmt.

5. Speichervorrichtung nach einem oder mehreren der vorangehenden Ansprüche, **dadurch gekennzeichnet, daß** die Speichervorrichtung (1) eine ebene, im wesentlichen horizontal ausgerichtete Ablage (4) für die Platten (5) aufweist.

6. Speichervorrichtung nach einem oder mehreren der vorangehenden Ansprüche, **dadurch gekennzeichnet, daß** die Fläche der Ablage (4) der maximalen einer zu bearbeitenden Platte (3) entspricht.

7. Speichervorrichtung nach einem oder mehreren der vorangehenden Ansprüche, **dadurch gekennzeichnet, daß** die Speichervorrichtung (1) eine tischartig ausgebildete Ablage (4) aufweist.

8. Speichervorrichtung nach einem oder mehreren der vorangehenden Ansprüche, **dadurch gekennzeichnet, daß** die Ablage (4) vertikal verschiebbar ausgebildet ist.

9. Speichervorrichtung nach einem oder mehreren der vorangehenden Ansprüche, **dadurch gekennzeichnet, daß** die Speichervorrichtung (1) vollständig vertikal verschiebbar ausgebildet ist.

10. Speichervorrichtung nach einem oder mehreren der vorangehenden Ansprüche, **dadurch gekennzeichnet, daß** die Ablage (4) mit Anschlägen (9) versehen ist, deren Höhe der Anzahl der abzulegenden Platten (5) entspricht.

11. Speichervorrichtung nach einem oder mehreren der vorangehenden Ansprüche, **dadurch gekennzeichnet, daß** eine Saugtraverse oberhalb der Ablage (4) vorgesehen ist für eine Abnahme der Platten (5).

12. Speichervorrichtung nach einem oder mehreren der orangehenden Ansprüche, **gekennzeichnet durch** eine die Absenkung taktweise regelnde Steuervorrichtung.

13. Speichervorrichtung nach einem oder mehreren der vorangehenden Ansprüche, **dadurch gekennzeichnet, daß** eine die Platten auf der Ablage (22) ablegende Übergabevorrichtung (21) um eine Schwenkachse (32) verschwenkbar ausgebildet ist.

14. Speichervorrichtung nach einem oder mehreren der vorangehenden Ansprüche, **dadurch gekennzeichnet, daß** die Schwenkachse (32) etwa mittig angeordnet ist.

15. Speichervorrichtung nach einem oder mehreren der vorangehenden Ansprüche, **dadurch gekennzeichnet, daß** vier Stellvorrichtungen (33-36) in den Eckbereichen der Übergabevorrichtung (21) vorgesehen sind.

16. Speichervorrichtung nach einem oder mehreren der vorangehenden Ansprüche, **dadurch gekennzeichnet, daß** die Übergabevorrichtung (21) als Gurtförderer ausgebildet ist.

17. Speichervorrichtung nach einem oder mehreren der vorangehenden Ansprüche, **dadurch gekennzeichnet, daß** die Ablage (22) mit Transportrollen (46-48) versehen ist, zwischen denen Gurte (39,40) von Gurtförderern angeordnet sind und daß die Auflagehöhen der Transportrollen (46-48) und der Gurte (39,40) gegeneinander verstellbar sind.

18. Speichervorrichtung nach einem oder mehreren der vorangehenden Ansprüche, **dadurch gekennzeichnet, daß** die Transportrollen (46-48) quer zu der Längserstreckung der Kantenbearbeitungsvorrichtung angeordnet sind.

19. Speichervorrichtung nach einem oder mehreren der vorangehenden Ansprüche, **dadurch gekennzeichnet, daß** Gruppen (43-45) von Transportrollen (46-48) nebeneinander quer zu der Längserstreckung angeordnet sind.

20. Speichervorrichtung nach einem oder mehreren der vorangehenden Ansprüche, **dadurch gekennzeichnet, daß** die zwischen den Transportrollen angeordneten Gurte (39,40) der Gurtförderer absenkbar sind.
